Europäisches Patentamt

European Patent Office

Office européen des brevets

(11) Publication number: **0 165 442**
**B1**

# EUROPEAN PATENT SPECIFICATION

(45) Date of publication of patent specification: **12.09.90**

(51) Int. Cl.⁵: **G 06 F 15/20**

(21) Application number: **85105726.5**

(22) Date of filing: **10.05.85**

(54) Method of, and system for, editing information.

(30) Priority: **22.06.84 US 623812**

(43) Date of publication of application:
**27.12.85 Bulletin 85/52**

(45) Publication of the grant of the patent:
**12.09.90 Bulletin 90/37**

(84) Designated Contracting States:
**DE FR GB IT**

(56) References cited:
**EP-A-0 026 382**

**BBC-NACHRICHTEN, vol. 63, no. 10, 1981, pages 358-368, Mannheim, DE; P. BRÜCKNER: "Das Farbsichtgerätesystem PAN 30 M in wehrtechnischen Führungssystemen"**

**REGELUNGSTECHNISCHE PRAXIS, vol. 19, no. 9, September 1977, pages 265-271, Munich, DE; M. SHAHATA: "Dialogbedienung über Bildschirm und virtuelle Tastaturen bei der Bildkonstruktion"**

(73) Proprietor: **International Business Machines Corporation**
**Old Orchard Road**
**Armonk, N.Y. 10504 (US)**

(72) Inventor: **Berry, Richard E.**
**4209 Val Verde Drive**
**Georgetown Texas 78626 (US)**
Inventor: **Ruiz, Thomas M.**
**7407 Attar Cove**
**Austin Texas 7859 (US)**

(74) Representative: **Colas, Alain et al**
**Compagnie IBM France Département de Propriété Intellectuelle**
**F-06610 La Gaude (FR)**

# EP 0 165 442 B1

**Description**

## Field of the Invention

This invention relates generally to editing information, and more specifically to an editor which is definable in terms of both configuration and mode.

## Description of the Prior Art

As information editing has evolved, user friendliness has improved dramatically. However, flexibility is still somewhat lacking, and there will always be room for improvement in the ease of use area.

The concept of a cursor as a visually discernible point of operation for text editing is well known. Basic insert, delete, and replace operations for editing text relative to cursor location are also well known. This is also the case for other editing operations such as a text merge operation. Embodied in a merge operation is the ability to get, copy and move portions or blocks of information for document, form letter, etc., preparation. Also embodied in a merge operation is block identification. For example, using an IBM Displaywriter System, a block of text can be identified by identifying the beginning of the block, cursing down to the line where the block is to end, and then identifying the end of the block. The lines cursored over are automatically identified and highlighted or video reversed. The identified block can thereafter be copied, moved, or deleted upon keying to a menu. As described in "Regelungstechnische Praxis, Vol 19, N°9, September 1977, pages 265—271, Munich, DE; M. Shahata", similar functions can also be performed by applying said functions, once selected on a virtual keyboard imbedded in the display screen, to a specific point of the display selected by a light pen. Moreover, in the graphics area, deletion has been improved in European patent application EP—84104627, covering a dynamic eraser. In that application, an eraser is definable and dynamically moveable over information for erasure.

Even with the above capabilities at hand, a number of drawbacks increases with the extent of the editing to be accomplished. For example, inserting, deleting or replacing a single character to correct the spelling of a word are mildly tedious operations, but have been fairly well refined. As the extent of the editing task increases towards paragraph deletion, excessive attention must be dedicated to the paragraph prior to actual deletion. This prior attention problem was overcome relative to graphics in the above referred to application EP—84104627 in that an eraser can be defined without identifying and/or defining the information to be erased. In addition, the eraser can be configured to be of any size and shape. However, the eraser remains a single mode editor, and other editing chores require calling other editors, identifying information, etc.

Another piece of prior art (BBC-NACHRICHTEN, vol. 63, No. 10, 1981, pages 358—363, Manheim, DE; P. BRÜCNER: "Das Farbsichtgerätesystem PAN 30 M in Wehrtechnischen Führungsystemen") discloses a display work-station using high resolution monitors and designed to provide a plurality of selectable functions to an operator. One of the available functions is the possibility to accede to a conventional text editor by selecting a key among other keys, which correspond to functions different from text editing. Thus, as can be seen from page 364, column 3, lines 25 to 37 of this prior art, this conventional selection of the editing mode can neither provide a selection of a given editor among a plurality of possible editors, nor choose an editing mode for the selected editor.

Thus, the above art is pertinent to varying degrees, but falls short of either anticipating the instant invention or rendering the instant invention obvious. More specifically, the instant invention presents an advance over the prior art in that an editor can be selected, and any one of a plurality of editing modes can be selected for the editor, without regard to the information to be affected. The advantages of this advance are improved flexibility and ease of use.

## Disclosure of the Invention

A unique method of editing displayed information is provided as claimed in order to improve system user friendliness in terms of improved ease of use and flexibility. An editor, and then a mode for the editor, are selected. Thereafter, the editor is used by the operator for editing a desired portion of the information according to the selected mode. The editor can be any displayed, called or built object such as a cursor or character. Thus, the selected object is used as an editing tool, or editor, for which a mode, i.e. a function to be performed by said editing tool, is also selected. Erase, restore, video reverse, move, etc. are selectable modes for the editor. Editing information is upon movement of the editor over the information and under mouse control. For example, one side of a window border can be selected as an editor. Thereafter, movement of the editor across or over information in the window will result in erasure of information passed over by the editor. The mode can then be changed to a restore mode and the editor repositioned to its location at the time of being defined as an editor. This will result in restoration of all erased information.

## Brief Description of the Drawings

Fig. 1 is a pictorial representation of a window of text made up of a portion of a document.

Fig. 2 is a pictorial representation of the window of text shown in Fig. 1 following selection of the bottom border of the window and an erase mode, and erasure of a portion of the text in the window.

Fig. 3 is a pictorial representation of the window of text shown in Figs. 1 and 2 following selection of a restore mode and repositioning of the editor to the position shown.

Fig. 4 is a flow chart illustrating operator actions and system operations performed in carrying out this invention.

## Best Mode for Carrying Out the Invention

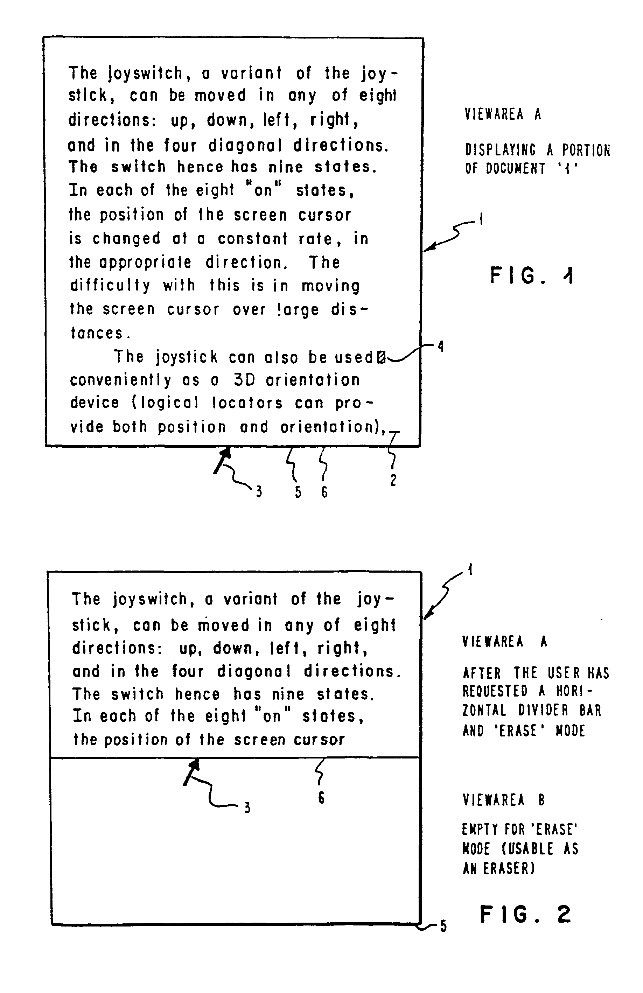

For a more detailed understanding of this invention, reference is first made to Fig. 1. In this figure is illustrated a window generally denoted by reference numeral 1. It is to be assumed that window 1 is being displayed on an all points addressable cathode ray tube display screen of a device controlled standalone or host connected computer workstation. Display and control of window 1 along with text displayed therein can be by means of an application program useable by the workstation.

Window 1 is bordered as shown, has dimensions smaller than those of the screen upon which it is being displayed and provides a view into information more generally displayed on the remainder of the screen. When operation is within the text information in window 1, the point of operation is denoted by a textual cursor 2. Cursor 2, as shown, is displayed as an underscore character. A cursor 2 is moved under device control, the point of operation is moved. For text type operations, the device is generally only a keyboard and as each character is keyed, cursor 2 is advanced to the next character position. For other types of operations such as draw graphics, an appropriate device may be a mouse, joystick, etc. However, there are instances where a plurality of devices are attached to the workstation for controlling cursor motion and other operations.

In common use today at the same time and on the same screen are two types of cursors. One is the previously described textual cursor 2 which is normally associated with text and under keyboard control. The other is a pointing cursor, such as cursor 3, which is normally associated with displayed graphics and under other device control. The other device is popularly a mouse.

For editing operations on the text in window 1, cursor 2 in most instances only denotes a point of operation. For example, deletion or erasure of the comma prior to cursor 2 can entail keyboard keystroking an error-correct-backspace operation. Upon deletion of the comma, cursor 2 will be repositioned one character position to the left. However, cursor 2 has nothing directly to do with the editing operation itself.

The particular configuration of the textual cursor being used is a matter of choice. In common use today as an alternative to an underscore character type cursor is a highlighted or video reversed character box such as cursor 4. Even when this type of cursor is in use, it has nothing directly to do with the actual editing operation being performed. Only the point of operation is denoted.

Regardless of whether cursors 2 or 4 are in use, if the device is a keyboard, deletion of the last four lines of text in Fig. 1 entails keyboarding. A cursor can be used to aid in defining or bracketing the text to be deleted, but cursor motion does not cause deletion. In the IBM Displaywriter System, a delete mode can be entered for deleting a block of text. When entered, the text following the cursor on the same line is highlighted. Vertical cursor motion across other lines of text will result in the other lines being highlighted. When the end point for deletion is reached, keyboarding must occur for bracketing. Following bracketing, additional keyboarding is necessary to effect deletion. This is tedious and time consuming.

A solution to the above tedious and time consuming editing task is to permit an operator or user to define an editor by selecting the editor and then selecting a mode for the selected editor. Selection of the editor and mode, as well as movement of the editor, is conveniently accomplished with a keyboard and a mouse.

To delete the last four text lines in window 1, an operator can, under mouse control, select bottom border 5 of window 1 as an editor 6. Selection is by positioning cursor 3 such that it is coincident with border 5, and then depressing a select button on the mouse. Following selection of editor 6, the operator can, upon keyboarding, select an erase or deleted mode. Mode selection is by keying a single function key.

Once editor 6 and a mode for editor 6 have been selected, movement of editor 6 is under mouse control. Movement of editor 6 to the position shown in Fig. 2 will result in erasure or deletion of all lines passed over by editor 6. In the instance illustrated in Fig. 2, editor 6 has been moved too far in that nine lines have been deleted instead of four. To recover from this, another function key is depressed to select a restore mode. In so doing, the editor is redefined. After the restore mode has been selected, editor 6 is moved back down under mouse control. During downward movement of editor 6, each original line passed over will be restored. For entire lines of text, blanking for erasure can be facilitated by simply turning on a line attribute bit in the refresh buffer utilized by the system, or by any number of other available means. Unblanking for restoration can be by turning the attribute bit off.

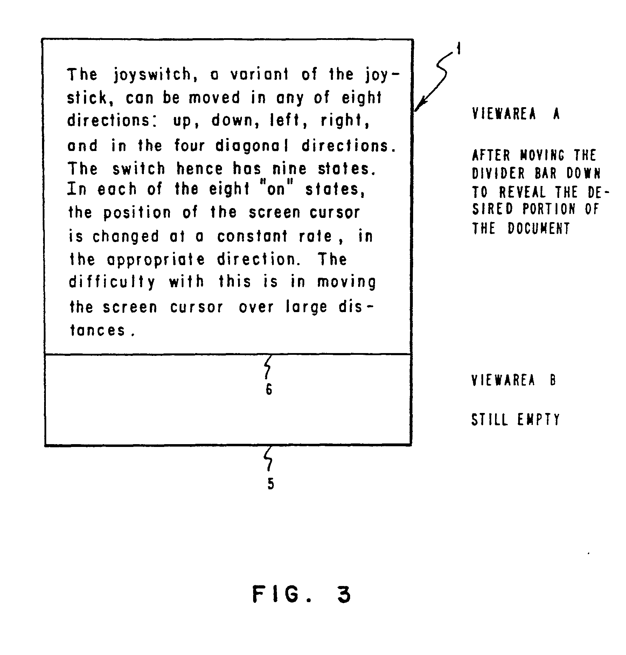

When the desired position for the editor has been reached, such as that illustrated in Fig. 3, editor 6 is deselected. Deselection of editor 6 is by mouse button depression, and will result in an updating of system memory based on editing performed while the editor was selected.

Window 1 can be a window in a traditional sense, a page outline filling the screen, etc. In addition, other modes for editor 6 can be selected. When selected and upon upward movement of editor 6, the text will be moved or pushed up in window 1. If the text in Fig. 1 were pushed up, the last line in Fig. 1 would be adjacent editor 6 in Fig. 2.

Further, an editor can be any other callable and/or selectable symbol, character, object, etc. For example instead of selecting border 5, an operator could have called a bar or line from a symbol table. A programmer writing an application program according to this invention may prefer this route rather than providing means for distinguishing border 5 from the remainder of the border of window 1. Alternatively,

# EP 0 165 442 B1

an operator could have selected cursor 4, if provided, and selected a video reverse mode through function key depression. Thereafter, all text passed over with cursor 4 under mouse control would be video reversed. If more text than desired is video reversed, a function key can be depressed for selecting a restore mode, and the cursor again passed over the text to be returned to normal video displaying.

Mode selection through function key depression is well within the skill of an average programmer, and is a type of operation commonly used today. The use of code keys in conjunction with other character keys is an available alternative for selecting a mode.

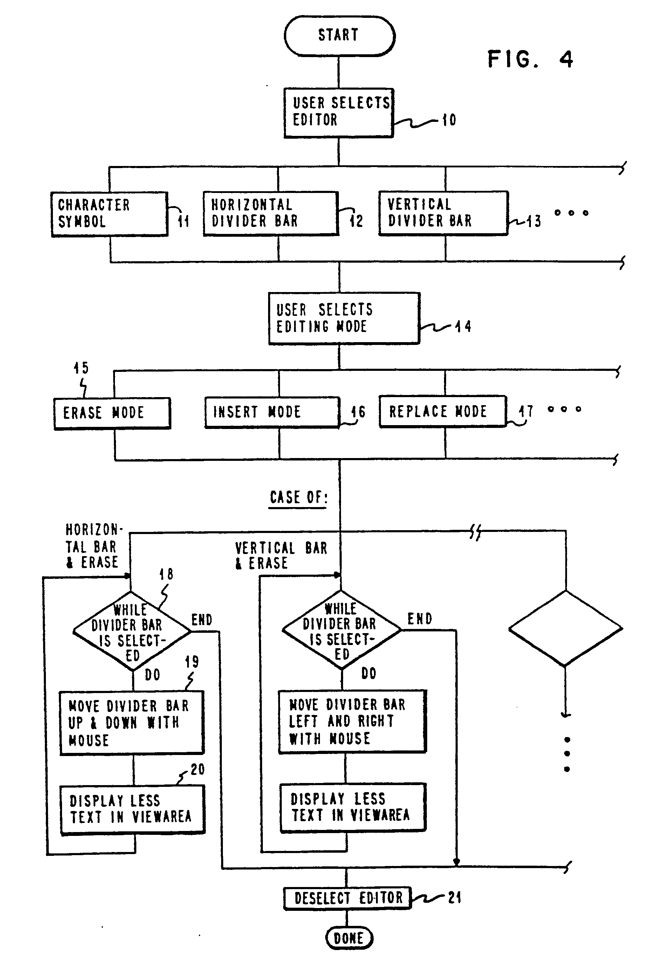

Reference is again made to Figs. 1—3 and the illustration set out below of an application program useable by a processor in the workstation or host for facilitating editing according to this invention. The application program is also to be considered in conjunction with the flow chart of Fig. 4. The program is in program design language from which source and machine code are derivable. Embedded in the program are comments bounded by **. Again, it is to be assumed that the workstation is under mouse and keyboard device control.

The user or operator begins by selecting (10) a displayed editing icon. Icon selection can be under mouse control, and is accomplished by using cursor 3 and depressing a button on the mouse. A 'CHARACTER SYMBOL' (11) is selected for column editing, etc. As has been pointed out, the editor could also have been built or called from a symbol table.

Upon a 'HORIZONTAL DIVIDER BAR' selection (12), it is to be assumed that the bar is initially displayed at the bottom of a window 1. The initial location is of relatively little importance since the user may reposition the editor to any location on the screen. The user then positions the editor at the desired location and selects (14) a mode for editing. Assume an erase mode (15) is selected. While the editing mode is selected (18), movement (19) of the editor will cause editing to be performed according to the selected mode on all text over which the editor is passed. If, while in erase mode, the editor is moved up three lines, these three lines are erased (20).

Movement of the editor can alternatively be with keyboard cursor motion keys or with any other standard and well known means for moving "cursors" on a display. After the desired editing has been accomplished, the user deselects (21) the editor. This can be performed by pressing an 'End' key on the keyboard, a button on a mouse, or by using any other standard and well known technique for ending modes.

```
ON POINTER SELECTION (10

    CASE OF EDITOR

        CASE:  'CHARACTER SYMBOL' (11)

            .

            .

            .

        CASE:  'HORIZONTAL DIVIDER BAR' (13)
            **DRAW A USER REQUESTED HORIZONTAL DIVIDER
              BAR AT THE BOTTOM OF SCREEN OR WINDOW**
            CALL MOUSE-LOCATION
            CALL DRAW_HORIZ_BAR
        ENDCASE
        **ALLOW THE USER TO POSITION THE BAR AS DESIRED**
        DO UNTIL EDITING MODE SELECTED (14)
            CALL MOUSE_LOCATION
            CALL REDRAW_HORIZ_BAR
        ENDDO
        CASE OF EDITING MODE
            CASE:  'ERASE MODE' (15)
                **FOR 'ERASE MODE' USING A HORIZONTAL DIVIDER
                (18) BAR MOVE (19) THE DIVIDER BAR UP OR DOWN
                WITH MOUSE MOVEMENT**
```

4

```
CASE OF EDITING ICON
  CASE: 'HORIZONTAL DIVIDER BAR'
      LINE 1=LOCATION (HORIZ_BAR) (20)
      DO UNTIL 'END' IS SELECTED .(21)
          CALL MOUSE_LOCATION
          CALL REDRAW_HORIZ_BAR
              ENDDO
          LINE 2=LOCATION (HORIZ_BAR
          CALL ERASE (LINE 1, LINE 2)
          CALL ERASE_HORIZ_BAR
            CASE: 'VERTICAL DIVIDER BAR'
                    •

                    •

                    •

          ENDCASE
      CASE: 'INSERT MODE' (16)
          •

          •

          •

      CASE: 'REPLACE MODE' (17)
          •

          •

          •

          ENDCASE
```

In summary, a unique method of, and system for, editing displayed information are provided in order to improve system user friendliness in terms of improved ease of use and flexibility. An editor, and then a mode for the editor, are selected. Thereafter, the editor is used by the operator for editing a desired portion of the information according to the selected mode. The editor can be any displayed, called or built object such as a cursor or character. Erase, restore, video reverse, move, etc. are selectable modes for the editor. Editing information is upon movement of the editor over the information and under mouse control. For example, one side of a window border can be selected as an editor, and an erase mode can be selected for the editor. Thereafter, movement of the editor across or over information in the window will result in erasure of information passed over by the editor. The mode can then be changed to a restore mode and the editor repositioned to its location at the time of being defined as an editor. This will result in restoration of all erased information.

## Claims

1. In a system for editing displayed information, including a host system working with an application program, a system memory usable by a processor, a mouse and a keyboard for controlling said system, a method of editing displayed information comprising the steps of selecting an object among any displayed, built or called objects and selecting a function to be performed by said object, characterized in that said selected object is an editing tool (editor) and said selected function is the editing function independently selected to be performed by said editor when moved across said information, thereby updating said system memory.

2. A method according to claim 1 including selecting another mode for said editor.

3. A method according to claim 2 wherein said selecting another mode includes selecting a restore mode for said editor.

4. A method according to claim 3 including, after selecting said restore mode, moving said editor over information previously edited to restore said information to a condition existing before editing said information.

5. A method according to claim 4 including deselecting said editor and said mode.

**Patentansprüche**

1. In einem System für die Ausgabe angezeigter Information einschließlich eines Zentralsystems, das mit einem Anwendeprogramm funktioniert, ein Speichersystem, das mit einem Prozessor, einer Maus und einer Tastatur für die Bedienung des besagten Systems verwendbar ist, ein Verfahren der Ausgabe angezeigter Information einschließlich der Schritte der Auswahl eines Objekts unter den angezeigten, aufgebauten oder aufgerufenen Objekten, dadurch gekennzeichnet, daß besagtes ausgewählte Objekt ein Ausgabeinstrument (Editor) und besagte ausgewählte Funktion die Ausgabefunktion ist, unabhängig ausgewählt, um durch besagten Editor ausgeführt zu werden, wenn er über besagte Information geführt wird, wodurch der besagte Systemspeicher aufgefrischt wird.

2. Verfahren gemäß Anspruch 1, das die Auswahl einer anderen Betriebsart für den besagten Editor enthält.

3. Verfahren gemäß Anspruch 2, in dem besagte Auswahl einer anderen Betriebsart eine Auffrischungsbetriebsart für besagten Editor enthält.

4. Verfahren gemäß Anspruch 3, das nach der Auswahl der besagten Auffrischungs-Betriebsart eine Bewegung des besagten Editors über die vorher ausgegebene Information enthält, um die besagte Information in den Zustand zurückzubringen, in dem sie vor der Ausgabe der besagten Information war.

5. Verfahren gemäß Anspruch 4, das die Rückwahl des besagten Editors und der besagten Betriebsart enthält.

**Revendications**

1. Dans un système d'édition d'informations affichées comprenant un système principal travaillant avec un programme d'application, une mémoire de système pouvant être utilisée par un processeur, une souris et un clavier pour commander ledit système, une méthode d'édition d'informations affichées comprenant les étapes de sélection d'un objet parmi divers objets affichés, construits ou appelés et de sélection d'une fonction à assurer par ledit objet, caractérisée en ce que ledit objet sélectionné est un outil d'édition (éditeur) et en ce que ladite fonction sélectionnée est la fonction d'édition indépendamment sélectionnee pour être exécutée par ledit éditeur lorsqu'il est passé sur lesdites informations, mettant ainsi à jour ladite mémoire de système.

2. Une méthode selon la revendication 1 comprenant la sélection d'un autre mode pour ledit éditeur.

3. Une méthode selon la revendication 2 dans laquelle ladite sélection d'un autre mode comprend la sélection d'un mode de restauration pour ledit éditeur.

4. Une méthode selon la revendication 3 comprenant, après la sélection dudit mode de restauration, le passage dudit éditeur sur des informations précédemment éditées pour restaurer lesdites informations dans l'état existant avant l'édition desdites informations.

5. Une méthode selon la revendication 4 comprenant le retrait de sélection dudit éditeur et dudit mode.

EP 0 165 442 B1

The Joyswitch, a variant of the joy-
stick, can be moved in any of eight
directions: up, down, left, right,
and in the four diagonal directions.
The switch hence has nine states.
In each of the eight "on" states,
the position of the screen cursor
is changed at a constant rate, in
the appropriate direction. The
difficulty with this is in moving
the screen cursor over large dis-
tances.
    The joystick can also be used
conveniently as a 3D orientation
device (logical locators can pro-
vide both position and orientation),

VIEWAREA A

DISPLAYING A PORTION
OF DOCUMENT '1'

FIG. 1

The joyswitch, a variant of the joy-
stick, can be moved in any of eight
directions: up, down, left, right,
and in the four diagonal directions.
The switch hence has nine states.
In each of the eight "on" states,
the position of the screen cursor

VIEWAREA A

AFTER THE USER HAS
REQUESTED A HORI-
ZONTAL DIVIDER BAR
AND 'ERASE' MODE

VIEWAREA B

EMPTY FOR 'ERASE'
MODE (USABLE AS
AN ERASER)

FIG. 2

1

The joyswitch, a variant of the joy-
stick, can be moved in any of eight
directions: up, down, left, right,
and in the four diagonal directions.
The switch hence has nine states.
In each of the eight "on" states,
the position of the screen cursor
is changed at a constant rate, in
the appropriate direction. The
difficulty with this is in moving
the screen cursor over large dis-
tances.

6

5

VIEWAREA A

AFTER MOVING THE
DIVIDER BAR DOWN
TO REVEAL THE DE-
SIRED PORTION OF
THE DOCUMENT

VIEWAREA B

STILL EMPTY

FIG. 3

EP 0 165 442 B1

**FIG. 4**

```
                    ( START )

                 ┌─────────────┐
                 │ USER SELECTS│
                 │ EDITOR      │~10
                 └─────────────┘

 ┌──────────┐      ┌──────────┐      ┌──────────┐
 │CHARACTER │      │HORIZONTAL│      │VERTICAL  │
 │SYMBOL    │~11   │DIVIDER BAR│~12  │DIVIDER BAR│~13  ○ ○ ○
 └──────────┘      └──────────┘      └──────────┘

                 ┌─────────────┐
                 │USER SELECTS │
                 │EDITING MODE │~14
                 └─────────────┘

 15
 ┌──────────┐      ┌──────────┐      ┌──────────┐
 │ERASE MODE│      │INSERT MODE│~16  │REPLACE MODE│~17  ○ ○ ○
 └──────────┘      └──────────┘      └──────────┘

                 CASE OF:

 HORIZON-              VERTICAL BAR
 TAL BAR               & ERASE
 & ERASE
              18                        
          ◇ WHILE ◇ END          ◇ WHILE ◇ END         ◇
          DIVIDER BAR            DIVIDER BAR
          IS SELECT-            IS SELECT-
          ED                    ED
            DO  19                 DO
          ┌──────────────┐     ┌──────────────┐
          │MOVE DIVIDER BAR│   │MOVE DIVIDER BAR│
          │UP & DOWN WITH │   │LEFT AND RIGHT │
          │MOUSE         │     │WITH MOUSE    │
          └──────────────┘     └──────────────┘
                    20
          ┌──────────────┐     ┌──────────────┐
          │DISPLAY LESS  │     │DISPLAY LESS  │
          │TEXT IN VIEWAREA│   │TEXT IN VIEWAREA│
          └──────────────┘     └──────────────┘

                 ┌──────────────┐
                 │DESELECT EDITOR│~21
                 └──────────────┘

                    ( DONE )
```

3